# EUROPÄISCHE PATENTSCHRIFT

(11) **EP 4 281 734 B1**
(45) Veröffentlichungstag und Bekanntmachung des Hinweises auf die Patenterteilung: **17.06.2026**
(21) Anmeldenummer: 21815918.4
(22) Anmeldetag: 09.11.2021
(51) Int. Cl.: G01D 5/20, G01D 5/245

(54) **INDUKTIVER LINEARWEGSENSOR**
INDUCTIVE LINEAR POSITION SENSOR
CAPTEUR INDUCTIF DE POSITION LINÉAIRE

(30) Priorität: 21.01.2021 DE 102021101209; 13.07.2021 DE 102021118019
(43) Veröffentlichungstag der Anmeldung: 29.11.2023
(73) Patentinhaber: HELLA GmbH & Co. KGaA, 59552 Lippstadt (DE)
(72) Erfinder: IRLE, Henning, 59557 Lippstadt (DE); FORST, Sebastian, 59174 Kamen (DE)
(74) Vertreter: Behr-Wenning, Gregor
(86) Internationale Anmeldenummer: PCT/EP2021/081028
(87) Internationale Veröffentlichungsnummer: WO 2022/156931

(56) Entgegenhaltungen:
- EP-A1- 3 179 214
- EP-A1- 3 479 072
- EP-A2- 0 289 033
- DE-A1- 102019 207 070
- DE-A1- 102019 209 494
- JP-A- H10 213 408

## Beschreibung

Die vorliegende Erfindung betrifft einen induktiven Linearwegsensor, wie er beispielsweise für ein Lenksystem eines Fahrzeugs eingesetzt werden kann, ein Lenksystem eines Fahrzeugs sowie ein Fahrzeug.

Aus der EP3179214 A1 und JPH1 0213408 A sind induktive Positionssensoren bekannt.

Eine Ausführungsvariante eines induktiven Positionssensors ist aus der DE 10 2018 102 698 A1 bekannt. Der Positionssensor ist mit einem gegenüber einem Stator beweglichen Teil und darauf angeordneten, eine dreidimensionale Form aufweisenden Cursor ausgebildet. Das bewegliche Teil und der Cursor sind um eine gemeinsame Drehachse drehbeweglich angeordnet. Der Positionssensor ist damit als ein induktiver Drehwinkelsensor zur Erfassung eines Drehwinkels des beweglichen Teils gegenüber dem Stator ausgebildet.

Es hat sich gezeigt, dass der beschriebene induktive Drehwinkelsensor für bestimmte Anwendungen im Fahrzeug mit kleinen Bewegungen, wie etwa bei einer variablen Nockenwellenverstellung, besonders vorteilhaft ist.

Für einige Anwendungen, wie etwa ein Lenksystem eines Fahrzeugs, wäre es wünschenswert, den induktiven Drehwinkelsensor hingegen aufgrund der sich bei Interpretation seiner Messergebnisse ergebenden Mehrdeutigkeit von möglichen Mehrfachumdrehungen, die sich bei Lenksystemen aus den Mehrfachumdrehungen der Lenkradbewegung ergibt, auch als Multiturn-Problematik bekannt, zu verbessern oder einen anderen Sensor zu nutzen, der mit diesen Anwendungen besser zurechtkommt. Denn die Erfassung aufgrund der Mehrfachumdrehungen der Lenkradbewegung ist sensorisch kompliziert, weil die Mehrfachumdrehungen (häufig auch als Multiturn bezeichnet) gezählt oder untersetzt werden müssen.

Bei künftigen Steer-by-wire-Lenksystemen kann die Problematik der Mehrdeutigkeit zunehmen, weil bei diesen die Lenksäule wegfällt und der Radwinkel der Lenkung als Positionsregelungsaufgabe zu verstehen ist. Anders als bei der heutigen Servolenkung in Fahrzeugen, bei der vor allem das Drehmoment geregelt wird, also eine Unterstützungsleistung der durch den Fahrer am Lenkrad aufgebrachten Kraft. Für die Positionsregelung in Steer-by-wire-Lenksystemen sind eine Soll-Position und eine präzise Ist-Positionserfassung notwendig.

Bei einigen automotiven Anwendungen wie dem Lenksystem sind außerdem vergleichsweise lange Wege von ca. 20 bis 30 cm zu messen. Das macht induktive Positionssensoren, insbesondere in der Ausführung als induktive Drehwinkelsensoren und neben der Problematik der Mehrdeutigkeit, sehr groß und vergleichsweise teuer. In gleicher Weise finden sich weitere Messorte für solche wie hier beschriebenen Wegsensoren mit vergleichsweise großem Messbereich an der Einfederung, Stoßdämpfern von Fahrzeugen oder an der Sitzschiene von Fahrzeugen wieder. Außerhalb des Fahrzeuges finden sich Anwendungen bei Werkzeugmaschinen mit entsprechenden X-Y-Verstell-Tischen oder im Anlagenbau oder Produktionsstraßen. Der vorliegenden Erfindung liegt die Aufgabe zugrunde, einen verbesserten induktiven Positionssensor anzugeben, der gleichermaßen für automotive und anderweitige Anwendungen vorteilhaft eingesetzt werden kann, insbesondere vergleichsweise lange Wege in kompakter und günstiger Bauweise messen kann und bezogen auf rotatorisch angekoppelte Messsysteme nicht das Problem der Mehrdeutigkeit aufweist.

Die voranstehende Aufgabe wird durch die Gegenstände der Patentansprüche gelöst. Insbesondere wird die Aufgabe durch einen induktiven Linearwegsensor nach Anspruch 1 gelöst. Ferner wird die Aufgabe durch ein Lenksystem nach Anspruch 8 und ein Fahrzeug nach Anspruch 12 gelöst. Weitere Vorteile und Details der Erfindung ergeben sich aus den Unteransprüchen, der Beschreibung und den Zeichnungen. Dabei gelten Merkmale und Details, die im Zusammenhang mit dem erfindungsgemäßen Linearwegsensor beschrieben sind, selbstverständlich auch im Zusammenhang mit dem erfindungsgemäßen Lenksystem und dem erfindungsgemäßen Fahrzeug und jeweils umgekehrt, sodass bezüglich der Offenbarung zu den einzelnen Erfindungsaspekten stets wechselseitig Bezug genommen wird beziehungsweise genommen werden kann.

Gemäß einem ersten Aspekt der Erfindung wird die Aufgabe gelöst durch einen induktiven Linearwegsensor gemäß Anspruch 1.

Vorteile des induktiven Linearwegsensors liegen insbesondere darin, dass durch die Ausbildung des Cursors als ein Verschiebeelement eine induktive Sensierung der Linearposition des zumindest einen Verschiebeelements gegenüber dem Stator auf einfache Art und Weise ermöglicht wird. In Anwendung bei einem Lenksystem entfällt mit dem Linearwegsensor die eingangs skizzierte Problematik der Mehrdeutigkeit und der Linearwegsensor kann vergleichsweise kompakt ausfallen und dennoch vergleichsweise lange Linearwege im Bereich von bis zu 300 oder 400 mm ohne Schwierigkeiten messen. Insbesondere kann vorgesehen sein, dass der induktive Linearwegsensor (im Folgenden auch nur als Linearwegsensor bezeichnet) mittels der Auswerteschaltung dazu eingerichtet ist, bei einer Bewegung des zumindest einen Verschiebeelements in der linearen Bewegungsrichtung einen von dem zumindest einen Verschiebeelement relativ gegenüber dem Stator zurückgelegten Linearweg zu erfassen.

Die Funktionsweise der induktiven Messung zwischen einem Stator und einem Cursor ist dem Fachmann in grundsätzlicher Art und Weise beispielsweise aus der DE 10 2018 102 698 A1 bekannt, auf die hierin vollständig Bezug genommen bzw. verwiesen wird, sowie aus den von der Firma HELLA GmbH & Co. KGaA vertriebenen Sensoren mit dem Markennamen CIPOS^{®} bekannt.

Bei dem erfindungsgemäßen induktiven Linearwegsensor kann es sich um einen Inkrementalgeber wie auch um einen Sensor handeln, der eine absolute Erfassung der Linearposition des zumindest einen Verschiebeelements relativ zu dem Stator ermöglicht. Mittels eines Inkrementalgebers ist lediglich eine digitale Erfassung der Linearposition des zumindest einen Verschiebeelements relativ zu dem Stator möglich, die zudem von der Historie der zuvor gezählten Inkremente abhängig ist und somit nach einem Neustart oder nach dem Einschalten des Linearwegsensors oder übergeordneten Systems keine unmittelbare absolute Positionsinformation zu liefern vermag. Mittels der Auswerteschaltung des Linearwegsensors kann auf dem Fachmann bekannte Weise nicht nur die Linearposition des zumindest einen relativ zu dem Stator, sondern auch ein von dem zumindest einen Verschiebeelement zurückgelegter Linearweg und/oder eine Relativgeschwindigkeit zwischen dem zumindest einen Verschiebeelement und dem Stator ermittelt werden. Ferner kann die Auswerteschaltung Mittel zur Signalverstärkung und Signalaufbereitung umfassen.

Der induktive Linearwegsensor gemäß dem ersten Aspekt der Erfindung kann in verschiedenen Anwendungen, insbesondere in Fahrzeugen bzw. bei verschiedenen automotiven und auch bei nicht automotiven bzw. anderweitigen Anwendungen, eingesetzt werden. Möglich ist die Anwendung des Linearwegsensors beispielsweise in einem Lenksystem eines Fahrzeugs. Die Anwendung für ein Lenksystem stellt dabei lediglich ein beispielhaftes, aber besonders vorteilhaftes Anwendungsgebiet dar, für das sich der Linearwegsensor gemäß dem ersten Aspekt der Erfindung in besonderem Maße eignet und in dem er eingesetzt werden kann, ohne hierauf beschränkt zu sein. Weiter günstige Anwendungsmöglichkeiten ergeben sich an der Einfederung des Fahrwerks, an Stoßdämpfern oder bei der Sitzverstellung an der Sitzschiene. Im nicht automotiven Kontext sind es vor Allem X-Y-VerstellEinrichtungen an Maschinen, im Anlagenbau und bei Produktionsstraßen.

Für eine Anwendung des Linearwegsensors wird der Stator und/oder das zumindest eine Verschiebeelement, vorteilhafterweise das zumindest eine Verschiebeelement, an einem beweglichen Teil befestigt. Das bewegliche Teil kann auch als Teil des Linearwegsensors aufgefasst werden. Bei der beispielhaften Anwendung im Lenksystem kann es sich hierbei insbesondere um eine Lenkaktuatorstange handeln. Das jeweils andere von Stator und zumindest einem Verschiebeelement, vorteilhafterweise der Stator, kann an einem nicht bewegten bzw. nicht beweglichen Teil positioniert werden, gegenüber dem das bewegliche Teil linear bewegt bzw. verschoben wird. Dadurch führt eine Linearbewegung des zumindest einen Verschiebeelementes unmittelbar zu einer identischen Positionsverschiebung der Linearposition von dem zumindest einen Verschiebeelement und dem beweglichen Teil gegenüber dem nicht bewegten Teil bzw. Stator. Aus der durch den Stator bzw. die Auswerteschaltung erfassten Linearposition bzw. Linearbewegung des zumindest einen Verschiebeelementes kann damit direkt bzw. unmittelbar auf die Linearposition bzw. Linearbewegung des beweglichen Teils geschlossen werden, welches im Rahmen der jeweiligen Anwendung hinsichtlich seiner Linearverschiebung erfasst werden soll. Im Beispiel des Lenksystems entspricht die Linearverschiebung der Lenkaktuatorstange damit einer veränderten Linearposition des darauf angeordneten zumindest einen Verschiebeelementes, sodass mittels des Linearwegsensors die Linearverschiebung erfasst werden kann, um darauf basierend eine entsprechende Lenkbewegung auszuführen.

Die Anordnung bzw. Befestigung des zumindest einen Verschiebelementes und/oder des Stators an dem beweglichen und/oder nicht beweglichen Teil kann auf verschiedene Art und Weise ausgeführt werden. Möglich ist beispielsweise das Verschrauben, Verschweißen, Anspritzen und/oder Verkleben der jeweiligen Komponenten miteinander bzw. aneinander. Vorteilhafterweise wird eine möglichst zerstörungsfreie Befestigungsweise gewählt, um die Anwendung nicht zu beeinträchtigen, die gleichzeitig aber dazu geeignet ist, eine sichere Befestigung zu gewährleisten, damit die Befestigung bzw. feste Position von dem zumindest einen Verschiebeelement und/oder Stator nicht verloren geht, was ansonsten zu Messfehlern führen könnte. Entsprechend kann vorgesehen sein, dass das zumindest eine Verschiebeelement und/oder der Stator für die entsprechende Befestigung an dem beweglichen Teil und/oder nicht beweglichen Teil eingerichtet ist. Beispielsweise können das zumindest eine Verschiebeelement und/oder der Stator entsprechende Befestigungsbohrungen, Klebeflächen oder dergleichen aufweisen.

Der Stator kann insbesondere als eine Leiterplatte mit der darauf angeordneten zumindest einen Erregerspule und zumindest einen Sensorempfangsspule ausgebildet sein. Der Stator bzw. die Leiterplatte kann auch die Auswerteschaltung aufweisen.

Die Koppelabschnitte können sich in der Erstreckung des zumindest einen Verschiebelementes linearzyklisch mit den Nichtkopplungsabschnitten abwechseln. Die Koppelabschnitte können aus einem metallischen Material ausgebildet sein. Insbesondere können die Koppelabschnitte aus einem elektrisch leitenden Vollmaterial ausgebildet sein. Hierdurch ist das zumindest eine Verschiebeelement und damit der Linearwegsensor sehr robust ausgebildet und damit auch für besonders widrige Umgebungsbedingungen geeignet. Auch kann das elektrisch leitende Material der Koppelabschnitte als ein vorzugsweise nicht ferromagnetisches Material, wie beispielsweise Kupfer, Aluminium, Edelstahl oder dergleichen, ausgebildet sein. Hierdurch sind die Koppelabschnitte besonders für den Einsatz unter korrosiven Umgebungsbedingungen geeignet.

Die Nichtkopplungsabschnitte können hingegen aus einem nicht-metallischen Material, insbesondere aus einem elektrisch isolierenden Material bzw. Isolator, gebildet sein. Beispielsweise können die Nichtkopplungsabschnitte aus einem Kunststoff ausgebildet sein. Damit kann sichergestellt werden, dass die Nichtkopplungsabschnitte die Messergebnisse des Linearwegsensors nicht verfälschen. In einer später näher erläuterten vorzugsweisen Ausgestaltung kann der Nichtkopplungsabschnitt durch einen Freiraum bzw. Luftraum zwischen den Koppelabschnitten gebildet werden.

Grundsätzlich ist es ausreichend, wenn der Linearwegsensor mit nur einem Verschiebeelement ausgebildet ist. Das Verschiebeelement bildet eine Spur mit induktiven Kopplungs- bzw. Koppelabschnitten und den Nichtkopplungsabschnitten, der die mindestens eine Sensorempfangsspule des Stators zugeordnet ist.

Erfindungsgemäß weist der zumindest zwei Sensorempfangsspulen auf. Der Linearwegsensor weist zumindest zwei relativ gegenüber dem Stator bewegliche und parallel zueinander angeordnete Verschiebeelemente auf. Die Koppelabschnitte der beiden Verschiebeelemente sind in Richtung der Längserstreckung des zumindest einen Verschiebeelements zueinander versetzt angeordnet. Jedem der Verschiebeelemente kann jeweils eine Sensorempfangsspule des Stators zugeordnet sein. Insbesondere kann eine jeweils einem Verschiebeelement zugeordnete Sensorempfangsspule dem jeweiligen Verschiebeelement gegenüberliegen. So kann jeweils eine induktive Kopplung der Erregerspule mit voneinander verschiedenen Sensorempfangsspulen erzielt werden, die jeweils unterschiedlichen Verschiebeelemente zugeordnet sind. Ferner ist es möglich, mehr als zwei Sensorempfangsspulen und mehr als zwei Verschiebeelemente zu verwenden. Dadurch kann die induktive Linearpositionserfassung durch den Linearwegsensor weiter verbessert werden.

Zwei Verschiebeelemente in einer Ebene parallel zu orientieren, birgt den Vorteil eine ausreichende Entkopplung der beiden Spuren zu erzielen und den Stator einfach als eine einzelne Leiterkarte (im Englischen auch als Printed Circuit Board, kurz PCB, bezeichnet) realisieren zu können. Jedoch sind die Verschiebeelemente in der Regel über eine Führung am Stator entlang zu verfahren. Um das Verschiebeelement bei minimalem Materialeinsatz dennoch mechanisch stabil zu gestalten, sind Ausführungen vorteilhaft, bei denen das Verschiebeelement nicht in einer Ebene gestaltet, sondern vielmehr als gebogenes Teil hergestellt ist. So ist eine Herstellung als Stanzbiegeteil von großem Vorteil. Es sind verschiedene Varianten denkbar, angefangen von einer einfachen "V"-förmigen Ausgestaltung mit einem ersten Verschiebeelement auf der linken Seite des "V" und einem zweiten Verschiebeelement auf der rechten Seite des "V". Nachteilig an einer solchen einfachen Abkantung ist es, dass in diesem Fall zwei Leiterkarten für jeweils den linken und den rechten Teil des "V" eingesetzt werden müssen. Vorteilig bei einer solch einfachen Abkantung, jedoch im übertragenen Sinn auch in weiteren Ausführungen, kann eine gewisse eingebrachte Vorspannung des Stanzbiegeteils sein. Auf jeden Fall ist das Stanzbiegeteil als Verschiebeelement am Stator linear vorbei zu bewegen, was durch eine entsprechende Führung in einem Statorgehäuse erzielt werden kann. Mit der Aufgabe das Verschiebeelement möglichst spielfrei und mit geringen Toleranzen zu führen, kann eine Vorspannung der beiden Schenkel des "V" in Kombination mit der "V"-förmigen Führung im Stator vorteilhaft sein. Je nach weiterer Ausgestaltung der Führung, muss die Form der Führung nicht der eines "V" entsprechen, sondern kann beispielsweise der einer Schwalbenschwanzführung entsprechen oder vom Schnitt teiltrapezförmig oder "U"-förmig sein. Hervorgehoben werden soll eine besonders vorteilhafte Profilierung, eines U-Profils, bei der die beiden Verschiebeelemente sich auf den Schenkeln des "U" befinden. In diesem Fall kann besonders vorteilhaft eine einzelne Mehrlagen-Leiterkarte in das "U" eingeführt werden. Die Mehrlagen-Leiterkarte kann ausgestaltet sein, das erste Verschiebeelement im linken Schenkel des "U" mittels erster Sender- und Empfangsspulen auf ersten Lagen der Leiterkarte induktiv zu erfassen und mittels zweiter Sender und Empfangsspulen auf zweiten Lagen der Leiterkarte das zweite Verschiebeelement des rechten Schenkels des "U" zu erfassen. Anders ausgedrückt und in der Vorstellung der aufrecht in ein U hinein gestellten Leiterkarte misst ein Teil der Lagen nach links und ein anderer Teil der Lagen nach rechts. Hierbei ist von mindestens zwei Lagen und aufgrund der üblichen Entflechtungs- Problematik und der Ausgestaltung von Durchkontaktierungen, von eher mindestens vier Lagen auszugehen. Hinzu können in der Mitte des Lagenaufbaus der Leiterkarte noch weitere Schichten kommen, in denen Abschirmstrukturen realisiert werden, die helfen können, ein Übersprechen der induktiven Signale der beiden Verschiebeelemente und respektive der hierfür verwendeten Sende- und Empfangsspulen zu unterdrücken.

Es kann außerdem vorgesehen sein, dass die zumindest zwei Verschiebeelemente jeweils eine unterschiedliche Anzahl an Koppelabschnitten aufweisen. Zudem kann die Auswerteschaltung zur Auswertung des zurückgelegten Linearwegs auf Basis der zumindest zwei Verschiebeelemente und zumindest zwei Sensorempfangsspulen nach Art des Nonius-Prinzips eingerichtet sein. Hierdurch ist eine induktive Erfassung der Linearposition des beweglichen Teils, auf dem die Verschiebeelemente gemeinsam befestigt werden können, relativ zu dem Stator jederzeit und mit hoher Präzision ermöglicht. Diese Fähigkeit wird auch als "True Power On" bezeichnet, wonach eine Positionserfassung auch direkt nach dem Einschalten des Linearwegsensors, also nach dessen Überführung in dessen Betriebszustand, möglich ist. Entsprechend ist auch eine Indexierung oder dergleichen bei dem Linearwegsensor gemäß der vorliegenden Ausführungsform nicht erforderlich.

Nach der Art des Nonius-Prinzips ausgestaltet kann auch von zwei unterschiedlichen Messwegen bzw. Spuren gesprochen werden, die durch die zumindest zwei Verschiebeelemente bereitgestellt werden. Die Verschiebeelemente können prinzipiell nebeneinander oder übereinander angeordnet werden. Grundsätzlich können die Cursor eine Länge im Bereich von beispielsweise 2 bis 10 cm, insbesondere im Bereich von beispielsweise 3 bis 5 cm, aufweisen. Nach Art des Nonius-Prinzips kann mittels der Auswerteschaltung die relative Verschiebung bzw. Bewegung des aus den Cursor gebildeten Verschiebeelementen bzw. daran befestigten beweglichen Teils auch eine wesentlich größere Länge von 30 cm oder mehr, einfach und präzise gemessen werden.

Das Nonius-Prinzip unterscheidet eine Noniusprimärspur und eine Noniussekundärspur. Zunächst bezogen auf die Noniusprimärspur funktioniert das Noniusverfahren grundsätzlich derart, dass ein erster Koppelabschnitt als Element des ersten Verschiebeelementes über der Noniusprimärspur zugehörige Statorspulen (Empfangsspulen und Sendespulen) bewegt wird. Dabei entsteht mit fortschreitender Bewegung des Koppelabschnittes ein linearer Anstieg des Sensorausgangssignals. Der genannte Koppelabschnitt ist Teil eines Verbundes von weiteren Koppelabschnitten, die zu dem so genannten Verschiebeelement zusammengefasst sind. Breiten der Koppelabschnitte und Abstände der Koppelabschnitte zu- bzw. zwischeneinander sind so gewählt, dass sofern ein Koppelabschnitt des Verschiebeelementes aus dem Erfassungsfeld des Stators herausläuft, der nächste Koppelabschnitt auch schon hereinläuft. Im Detail kann das Prinzip in der Regel durch den Einsatz von nicht nur zwei Koppelabschnitten, sondern drei oder mehr Koppelabschnitten im Verschiebeelement verbessert werden, da dann immer ein Koppelabschnitt gerade reinläuft, ein Koppelabschnitt voll erfasst wird bzw. voll im Erfassungsfeld ist und ein dritter Koppelabschnitt gerade herausläuft. Als Ausgangssignal entsteht so ein Dreiecksignal.

Nun kommt die zweite Nonius-Spur bzw. die zweite Sensorempfangsspule mit dem zweiten Verschiebeelement ins Spiel, die ein örtlich phasenverschobenes Dreiecksignal unterschiedlicher Länge erzeugt. Beide Nonius-Spuren bzw. Verschiebeelemente mit den ihn zugeordneten Sensorempfangsspulen können mittels eines Nonius-Algorithmus in der Auswertevorrichtung verrechnet werden. So wird ein Linearwegsensor bereitgestellt, der aufgrund der unterschiedlichen Längen der Verschiebeelemente und der verorteten Phasenbeziehung auf dem gewünschten Messweg von zehn cm oder mehr eindeutig ist. So gelingt mit der Bereitstellung von zwei beispielsweise parallelen Verschiebeelemente und zwei Sensorempfangsspulen, die jeweils eine Nonius-Spur bilden, ein hinsichtlich der Kosten attraktiver und äußerst kompakter Linearwegsensor. Dagegen weisen bekannte Linearwegsensoren häufig die Problematik auf, dass der Quotient aus Bauraumlänge und Messweg bei solchen sehr groß ist, was unvorteilhaft ist.

Die zumindest zwei parallel zueinander angeordneten Verschiebeelemente sind erfindungsgemäß nebeneinander und in einer gemeinsamen Ebene angeordnet. Die Ausbildung der Verschiebeelemente nebeneinander ermöglicht einen besonders kompakten Linearwegsensor. Die Anordnung der Verschiebeelemente in einer gemeinsamen Ebene ermöglicht eine besonders einfache Fertigung, beispielsweise als ein Stanzteil, wie später näher erläutert wird. Ein noch entscheidender Vorteil dieser planaren Ausgestaltung ist es, beide Noniusstrukturen des Stators auf einer einzelnen Leiterkarte bzw. Leiterplatte zu geringen Gesamtkosten realisieren zu können. Insbesondere können die beiden Verschiebeelemente in der Anordnung in der gemeinsamen Ebene eine oder gegenüberliegende Oberflächen miteinander teilen. Ferner können die Verschiebeelemente einstückig bzw. monolithisch miteinander ausgebildet sein.

Erfindungsgemäß ist vorgesehen, dass die zumindest zwei parallel zueinander angeordneten Verschiebeelemente durch einen zwischen den Koppelabschnitten der jeweiligen Verschiebeelemente verlaufenden Verbindungssteg miteinander verbunden sind. Der Verbindungssteg erlaubt eine konstruktiv einfache Verknüpfung der beiden Verschiebeelemente bzw. ihrer jeweiligen Koppelabschnitte miteinander, ohne, dass die Messergebnisse des Linearwegsensors hierdurch beeinträchtigt werden.

Im Übrigen kann vorgesehen sein, dass das zumindest eine Verschiebeelemente als ein sich in Richtung seiner Längserstreckung in einer Ebene erstreckendes Flachstück ausgebildet ist. Als Flachstück ausgebildet ist das zumindest eine Verschiebeelement besonders kompakt ausgebildet. Bei einteiliger Ausgestaltung mehrere Verschiebeelemente miteinander, können alle Verschiebeelemente gemeinsam durch das Flachstück gebildet werden. Als ein Flachstück wird ein im Wesentlichen flaches bzw. plattenförmiges Teil verstanden. Das Flachstück kann eine im Wesentlichen rechteckige Geometrie aufweisen. Die einander gegenüberliegenden Oberflächen eines Flachstücks, welche flächenmäßig am größten beim Flachstück sind, können eben und parallel zueinander ausgebildet sein.

Auch kann vorgesehen sein, dass die Koppelabschnitte als Erhebungen gegenüber den Nichtkopplungsabschnitten ausgebildet sind. Dies ist eine einfache Art und Weise, dass die Sensorempfangsspulen nahe an die Koppelabschnitte herangeführt werden können, um präzise erfasst zu werden. Die Nichtkopplungsabschnitte hingegen können eine größere Distanz zu der zumindest einen Sensorempfangsspule aufweisen, als die Koppelabschnitte. Dadurch kann verhindert werden, dass die Nichtkopplungsabschnitte induktiv mit der zumindest einen Sensorempfangsspule gekoppelt werden.

Außerdem kann vorgesehen sein, dass die Nichtkopplungsabschnitte als Aussparungen zwischen den Koppelabschnitten des zumindest einen Verschiebeelements ausgebildet sind. Dies ist eine besonders einfache Art und Weise, die Nichtkopplungsabschnitte bereitzustellen, um eine induktive Kopplung dieser Abschnitte mit der zumindest einen Sensorempfangsspule zu vermeiden. Durch die Aussparungen befindet sich zwischen den Koppelabschnitten lediglich Luft bzw. ein Luftraum, welcher die Koppelabschnitte voneinander separiert und unerwünschte Messbeeinflussungen verhindert. Die Aussparungen können vorteilhafterweise sehr einfach hergestellt werden, beispielsweise durch Herausstanzen der Nichtkopplungsabschnitte aus einem Vollmaterial, beispielsweise metallischen Stanzteil oder Flachstück. Dies sorgt für besonders geringe Herstellungskosten des Linearwegsensors.

Ferner kann vorgesehen sein, dass das zumindest eine Verschiebeelement ein metallisches Stanzteil ist. Das metallische Stanzteil kann beispielsweise als eine Rolle bzw. als ein Coil aus Metall, beispielsweise Edelstahl, bereitgestellt werden und durch Abwickeln des gerollten Metalls gestanzt werden, um das Verschiebeelement zu erzeugen. Dadurch ist eine besonders einfache Herstellung des Verschiebeelements möglich.

Auch kann vorgesehen sein, dass das zumindest eine Verschiebeelemente einen elektrisch nicht leitfähigen Träger aufweist und die Koppelabschnitte auf dem Träger aufgebracht sind. Der Träger kann beispielsweise aus einem Kunststoffmaterial hergestellt, insbesondere spritzgegossen sein. Der Träger, der alternativ auch als Kern bezeichnet werden kann, ermöglicht unter anderem eine besonders einfache spätere Befestigung des zumindest einen Verschiebeelements an dem beweglichen oder nicht beweglichen Teil. Die Koppelabschnitte können beispielsweise als vereinzelte elektrisch leitende Plättchen, insbesondere Metallplättchen, oder elektrisch leitende Beschichtungen, insbesondere Metallbeschichtungen, auf dem Träger aufgebracht sein, etwa durch Kleben oder durch einen anderweitigen Prozess, wie Eintauchen in ein flüssiges Metallbad oder zweitens durch metallisches Bedampfen oder Sputtern. Die Koppelabschnitte können auch in einem Sinterverfahren hergestellt werden. Dies birgt den Vorteil, dass die auftretenden, durch den Prozess verursachten Fertigungstoleranzen weiter eingeschränkt werden und somit optimal für die Sensorik ausgelegt werden können. Dementsprechend braucht das zumindest eine Verschiebeelement nicht vollständig aus einem elektrisch leitenden Material ausgebildet sein. Es ist ausreichend, wenn lediglich die auf dem Kern bzw. dem Träger angeordnete Beschichtung bzw. die darauf angeordneten Plättchen elektrisch leitend ausgebildet sind, was die Fertigungskosten des Linearwegsensors reduziert.

Gemäß einem zweiten Aspekt der Erfindung wird die eingangs erwähnte Aufgabe gelöst durch ein Lenksystem für ein Fahrzeug, wobei das Lenksystem den Linearwegsensor nach dem ersten Aspekt der Erfindung aufweist.

Das Lenksystem des Fahrzeugs kann bekannte Komponenten wie Lenkelement, beispielsweise Lenkrad, eine Fahrzeugachse usw. aufweisen.

Es kann vorgesehen sein, dass das zumindest eine Verschiebeelement an einer Lenkaktuatorstange des Lenksystems angeordnet ist. Der Linearwegsensor kann demgegenüber entsprechend mit seinem Stator auf oder an einem unbeweglichen bzw. nicht beweglichen Teil, etwa einem Gehäuse des Lenksystems, angeordnet sein. Diese vorteilhafte Anordnung ermöglicht eine vor einem eventuellen Verrutschen gesicherte Positionierung zur Messung mittels des Linearwegsensors in dem Lenksystem.

Außerdem kann vorgesehen sein, dass das Lenksystem als ein Steer-by-wire-System mit einem Steuergerät und einem elektromechanischen Aktor ausgebildet ist. Das Steuergerät kann mit dem Linearwegsensor gekoppelt sein. Das Steuergerät kann dazu eingerichtet sein, die vom Linearwegsensor erfasste Linearposition in einen Lenkbefehl für den elektromechanischen Aktor umzusetzen und an den elektromechanischen Aktor zu übertragen, sodass der elektromechanische Aktor eine dem Lenkbefehl entsprechende Lenkbewegung geregelt ausführen kann.

Der elektromechanische Aktor kann beispielsweise ein Elektromotor oder jede andere Art von Aktor sein, die die Lenkbewegung am Fahrzeug ausführen kann.

Der Linearwegsensor kann zumindest teilweise in oder an einem Gehäuse einer Leistungseinheit des Lenksystems angeordnet sein, welche zumindest den elektromechanischen Aktor aufweist. Derartige Leistungseinheiten werden häufig auch als Power-Pack bezeichnet und umfassen auch das Steuergerät des Steer-by-wire-Systems.

Gemäß einem dritten Aspekt der Erfindung wird die eingangs erwähnte Aufgabe durch ein Fahrzeug, insbesondere ein Kraftfahrzeug, wie beispielsweise einen PKW oder LKW, mit einem Lenksystem nach dem zweiten Aspekt der Erfindung gelöst.

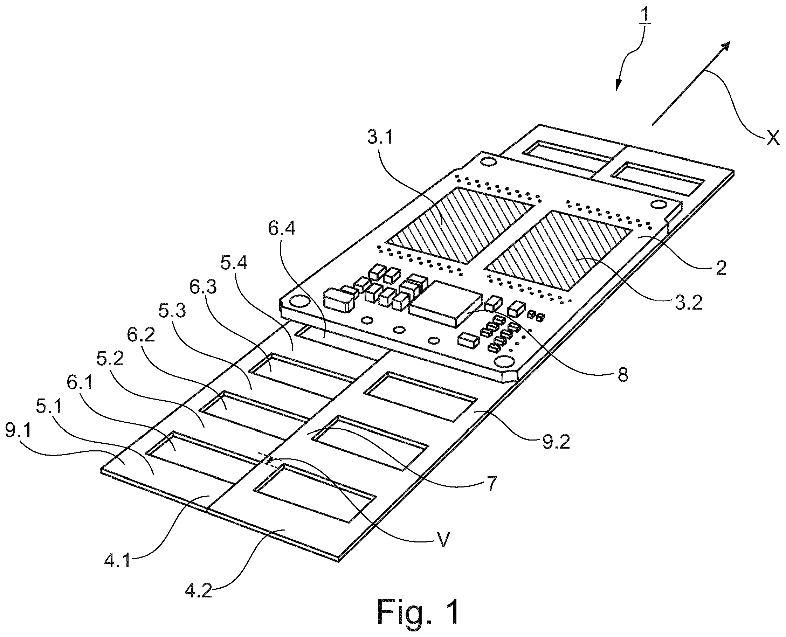

Anhand der beigefügten Zeichnungen wird die Erfindung nachfolgend näher erläutert. Sämtliche aus den Ansprüchen, der Beschreibung oder den Figuren hervorgehenden Merkmale, einschließlich konstruktiver Einzelheiten und räumlicher Anordnungen, können sowohl für sich als auch in den beliebigen verschiedenen Kombinationen erfindungswesentlich sein. Elemente mit gleicher Funktion und/oder Wirkungsweise sind in den Figuren 1 bis 6 jeweils mit denselben Bezugszeichen versehen. Es zeigen jeweils schematisch:
- Fig. 1: eine perspektivische Ansicht eines induktiven Linearwegsensors;
- Fig. 2: eine Draufsicht auf ein nicht unter den Anspruchswortlaut fallendes Beispiel eines induktiven Linearwegsensors;
- Fig. 3: eine Draufsicht auf die erfindungsgemäße Ausführungsform eines Cursors des induktiven Linearwegsensors aus Fig. 1 und 2;
- Fig. 4: eine Ansicht eines Signal-Linearweg-Diagramms der Sensorempfangsspulen im induktiven Linearwegsensor der Fig. 1 und 2;
- Fig. 5: eine Prinzipansicht eines Lenksystems eines Fahrzeugs; und
- Fig. 6: eine Prinzipansicht einer Leistungseinheit des Lenksystems aus Fig. 5.

Identische, funktionsgleiche oder baugleiche Elemente werden in den Figuren 1 bis 6 mit selben Bezugszeichen bezeichnet. Soweit ein identisches, funktionsgleiches oder baugleiches Element in derselben Figur mehrfach vorhanden ist, wird es mit demselben Bezugszeichen bezeichnet, wobei es lediglich zur Unterscheidung der Elemente untereinander fortlaufend nummeriert wird. Die Anzahl und Anordnung identischer, funktionsgleicher oder baugleicher Elemente im Sinne der Erfindung wird damit keineswegs beschränkt, sondern ist, soweit nichts anderes bestimmt ist, lediglich beispielhaft angegeben. Die fortlaufende Nummerierung ist durch einen Punkt vom Bezugszeichen getrennt.

Figur 1 zeigt einen induktiven Linearwegsensor 1 in einer perspektivischen Ansicht. Der induktive Linearwegsensor 1 weist einen Stator 2 und einen sogenannten Cursor auf. Der Linearwegsensor 1 ist zur Ermittlung der Linearposition und/oder des in eine Bewegungsrichtung X zurückgelegten Linearwegs des Cursors mit den Verschiebeelementen 4.1, 4.2 relativ zu einem Stator 2 ausgebildet.

Die Verschiebeelemente 4.1, 4.2, welche alternativ auch als Cursorbänder 4.1, 4.2 bezeichnet werden können, können im Allgemeinen mehr oder minder massiv erstellt sein. So können hier genutzte mehr bzw. minder elektrisch leitende Abschnitte durch zum Beispiel zerspanende Bearbeitung eines massiven Verschiebeelements 4.1, 4.2 realisiert sein. Es kann aber ebenfalls vorteilhaft sein, die Verschiebeelemente 4.1, 4.2 aus einem Metallband mittels Stanzen herzustellen. Diesem Gedanken folgend sollen die Verschiebeelemente 4.1, 4.2 im Folgenden als Cursorbänder 4.1, 4.2 bezeichnet werden, obgleich hiermit auch immer eine allgemeinere Gestaltung der Verschiebeelemente 4.1, 4.2 gemeint sein soll. Der Begriff "Cursorband" impliziert daher nicht, dass es sich um ein physikalisches Band handeln muss. Vielmehr ist der Begriff "Cursorband" vor Allem auch hinsichtlich der elektrischen Wirkungen zu verstehen, da die elektrischen Wirkungen in der Oberfläche der Verschiebeelemente 4.1, 4.2 stattfinden und die dreidimensionale Ausgestaltung der Verschiebeelemente 4.1, 4.2 nicht für das Messprinzip an sich, sondern eher aus Fertigungsgesichtspunkten oder notwendigen mechanischen Stabilitätskriterien erforderlich ist.

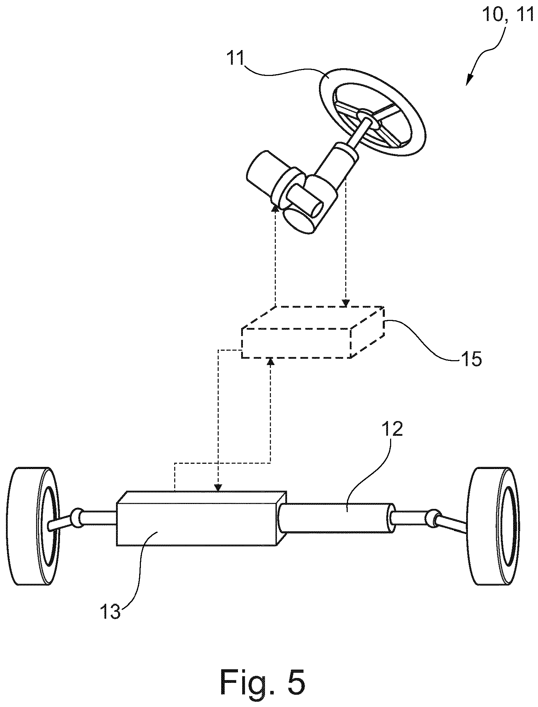

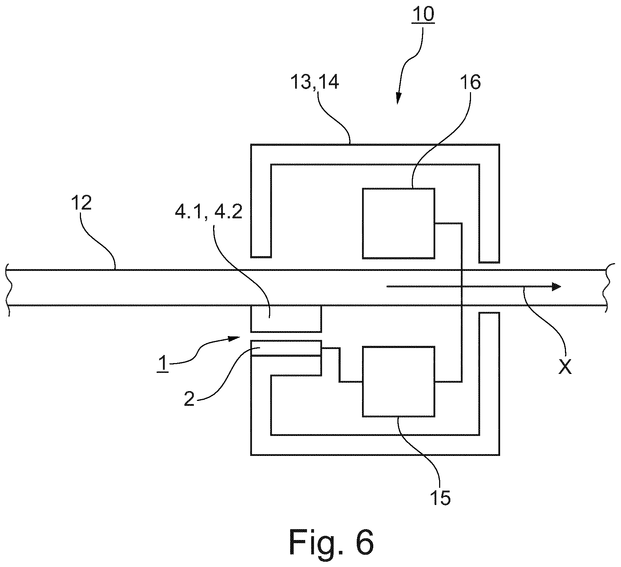

Der Cursor, insbesondere an einem beweglichen Teil, wie einer Lenkaktuatorstange 12 (siehe Fig. 5 und 6), befestigt und der Stator 2 können in einem Fahrzeug 100 (siehe Fig. 5) verbaut werden. Der Stator 2 weist eine nicht dargestellte Erregerspule und zwei Sensorempfangsspulensätze 3.1, 3.2 auf, die auf dem Fachmann bekannte Weise auf dem Stator 2 angeordnet sind, der vorliegend durch eine Leiterplatte gebildet wird. Die Sensorempfangsspulensätze 3.1, 3.2 bestehen wie in der mit dem Markennamen CIPOS^{®} bekannten Technologie, jeweils aus mehreren Empfangseinzelspulen. Im Fall der CIPOS^{®} Technologie werden hier stets drei Einzelempfangsspulen verwendet. Andere Lösungen mittels zwei Einzelempfangsspulen sind ebenso bekannt, wobei zur Verbesserung der Genauigkeit die Anzahl der Einzelempfangsspulen auch über drei hinaus gesteigert werden kann. Die zwei Sensorempfangsspulensätze 3.1, 3.2 sind dabei jeweils einem der Cursorbänder 4.1, 4.2 zugeordnet bzw. parallel dazu angeordnet.

Der Cursor wird vorliegend durch die beiden Cursorbänder 4.1, 4.2 gebildet. Die Cursorbänder 4.1, 4.2 sind parallel zueinander und nebeneinander angeordnet. Ferner teilen die beiden Cursorbänder 4.1, 4.2 sich eine gemeinsame Ebene bzw. erstrecken sich in einer gemeinsamen Ebene. Die Cursorbänder 4.1, 4.2 sind durch einen Verbindungssteg 7 miteinander verbunden, der Kopplungsabschnitte 5.1, 5.2, 5.3, 5.4, die analog der obigen Erläuterung zur Bezeichnung der Verschiebeelemente 4.1, 4.2 als Cursorbänder 4.1, 4.2 im Folgenden als Cursorpads 5.1, 5.2, 5.3, 5.4 bezeichnet werden, der die Cursorbänder 4.1, 4.2 jeweils miteinander verbindet (nur einige der Cursorpads 5 der Cursorbänder 4.1, 4.2 sind hier der Übersichtlichkeit halber bezeichnet). Die Cursorbänder 4.1, 4.2 weisen eine Längserstreckung auf, entlang dessen sich auch der Verbindungssteg 7 erstreckt.

Die jeweils quer zur Längserstreckung der Cursorbänder 4.1, 4.2 zueinander benachbarten Cursorpads 5 sind vorliegend mit einem Versatz V zueinander angeordnet. Mit anderen Worten setzen die Cursorpads 5 der jeweiligen Cursorbänder 4.1, 4.2 jeweils an unterschiedlichen in seiner Erstreckung betrachteten Längen bzw. Positionen des Verbindungsstegs 7 an. Außerdem weist das Cursorband 4.2 weniger Cursorpads 5 als das Cursorband 4.1 auf, vorliegend beispielsweise zehn Cursorpads 5 beim Cursorband 4.2 und elf Cursorpads 5 beim Cursorband 4.1.

Die Cursorpads 5 sind vorliegend aus einem elektrisch leitfähigen Werkstoff, insbesondere aus einem metallischen Werkstoff ausgebildet. Sie dienen als induktive Kopplungsbereiche für den Stator 2 mit seinen Sensorempfangsspulensätzen 3.1, 3.2. Zwischen den Cursorpads 5 befinden sich jeweils Nichtkopplungsbereiche 6.1, 6.2, 6.3, 6.4, wobei der Übersichtlichkeit halber auch hier nur einige der Nichtkopplungsbereiche 6 der Cursorbänder 4.1, 4.1 bezeichnet sind.

Die Nichtkopplungsbereiche 6 können durch ein weniger als die Cursorpads 5 oder nicht elektrisch leitfähiges Material gebildet sein. Insbesondere können sie durch einen Isolator zwischen den Cursorpads 5 gebildet werden. Vorliegend sind die Nichtkopplungsbereiche 6 in Form von Ausnehmungen bzw. Aussparungen in den Cursorbändern 4.1, 4.2 zwischen je zwei Cursorpads 5 eines jeden Cursorbandes 4.1, 4.2 ausgebildet. Dies ist eine besonders bevorzugte Ausführungsvariante der Nichtkopplungsbereiche 6, weil der Cursor dadurch einfach und kostengünstig gefertigt werden kann und gute Messergebnisse erzielt werden können.

Die gezeigten Cursorbänder 4.1, 4.2 bzw. der Cursor der Fig. 1 ist hier beispielhaft als ein Flachstück in Form eines metallischen Stanzteils ausgebildet. Dies hat Vorteile bei der Fertigung, da eine Rolle bzw. ein Coil des metallischen Materials des Cursors abgewickelt und passend zugeschnitten werden kann, um den Cursor zu erhalten. Die Nichtkopplungsbereiche 6 können dann durch Aufbringen oder Einbringen eines Isolators oder, wie hier gezeigt, durch Ausstanzen hergestellt werden.

Alternativ ist es beispielsweise aber auch möglich, den Cursor mit einem Träger oder Kern aus beispielsweise Kunststoff herzustellen. Dabei kann der Träger oder Kern kostengünstig in einem Spritzgussverfahren hergestellt werden. Die Cursorpads 5 können dann durch Kleben oder anderweitiges Aufbringen zwischen dem Kunststoff, dessen Bereiche dann als Nichtkopplungsbereiche 6 dienen, in der in Fig. 1 gezeigten Anordnung dienen.

Vorliegend weisen die Cursorpads 5 und die Nichtkopplungsbereiche 6 eine rechteckige Form auf. Dies ist fertigungstechnisch zwar einfach realisierbar, jedoch für die Funktion in den Cursorbändern 4.1, 4.2 nicht notwendig. So ist es alternativ beispielsweise möglich, die Cursorpads 5 und/oder die Nichtkopplungsbereiche 6 mit einer rechteckigen Form mit abgerundeten Ecken, einer elliptischen Form oder anderweitigen Form auszubilden.

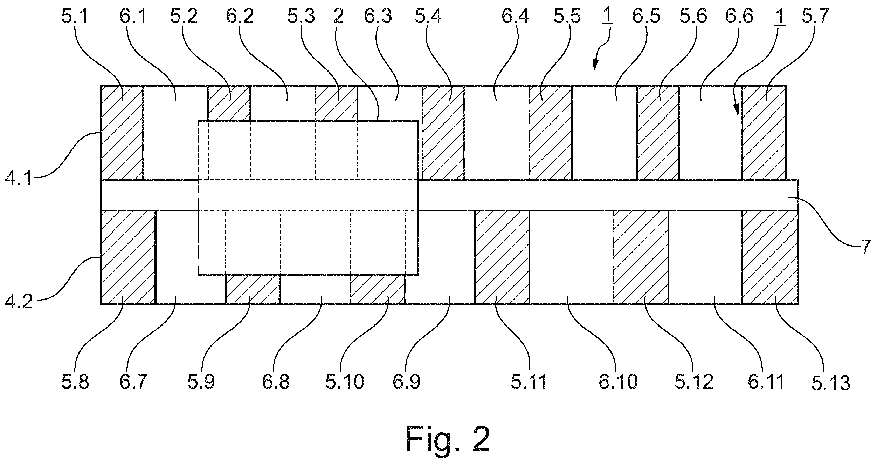

Die Cursorbänder 4.1, 4.2 weisen an ihren Außenseiten ferner die Cursorpads 5 jeweils verbindende Transportstege 9.1, 9.2 oder Transportstreifen auf. Diese sind rein optional und können entfallen. Bei dem oben beschriebenen Verfahren der Herstellung des Cursors als Stanzteil sind sie allerdings vorteilhaft, um den Cursor bzw. die Cursorbänder 4.1, 4.2 zu transportieren. In einem letzten Verfahrensschritt können sie allerdings entfernt werden. Ein solcher Cursor bzw. derartige Cursorbänder 4.1, 4.2 sind in der Fig. 2 gezeigt, auf die später näher eingegangen wird.

In einem Abstand von den Cursorbändern 4.1, 4.2 und parallel dazu befindet sich der Stator 2 mit seinen Sensorempfangsspulensätzen 3.1, 3.2. Ferner weist der Stator 2 die zumindest eine Erregerspule auf. Außerdem weist der Stator eine Auswerteschaltung 8 auf. Die Auswerteschaltung 8 ist zur Ermittlung der relativen Position des Cursors bzw. des beweglichen Teils, wie etwa der Lenkaktuatorstange 12 aus Fig. 6, bzw. eines zurückgelegten Linearwegs relativ zu dem Stator 2 in Abhängigkeit der induktiven Kopplung zwischen der Erregerspule und den zwei Sensorempfangsspulen des Stators 2 mittels des Cursors in einem Betriebszustand des induktiven Linearwegsensors 1 gemäß dem vorliegenden Ausführungsbeispiel eingerichtet, also wenn der induktive Linearwegsensor 1 eingeschaltet ist. Aus der so ermittelten Linearposition des beweglichen Teils relativ zu dem Stator 2 kann dann auf dem Fachmann bekannte Weise mittels der Auswerteschaltung 8 die Linearposition, der Linearweg und/oder die Lineargeschwindigkeit des beweglichen Teils relativ zu dem Stator 2 ermittelt werden.

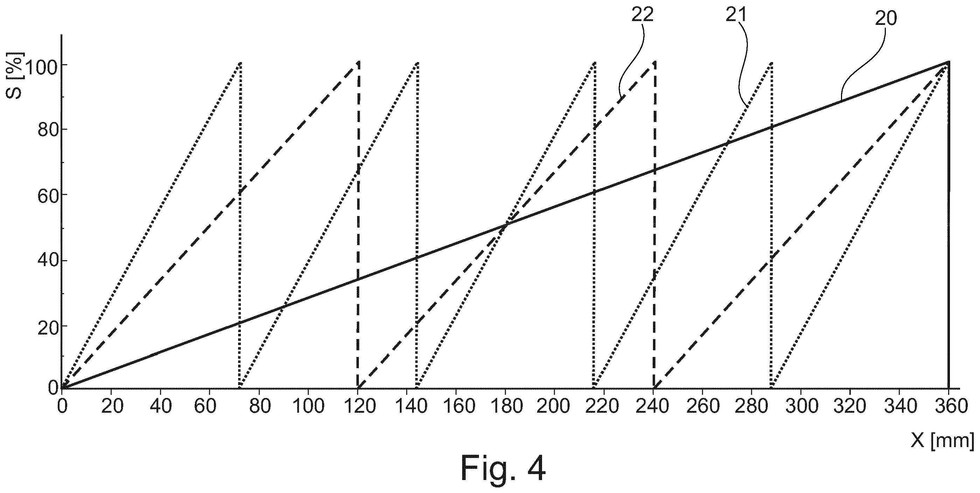

In Abhängigkeit der Linearlage bzw. Linearposition des beweglichen Teils bzw. des Cursors relativ zu dem Stator 2 gelangen ein oder mehrere Cursorpads 5 der Cursorbänder 4.1, 4.2 in Wirkverbindung mit der Erregerspule und den Sensorempfangsspulensätzen 3.1, 3.2 des Stators 2. Die zwischen den Cursorpads 5 liegenden Nichtkopplungsbereiche 6 sind im Wesentlichen nicht in Wirkverbindung mit der Erregerspule und den Sensorempfangsspulensätzen 3.1, 3.2 des Stators 2. Die Cursorpads 5 stellen damit jeweils eine induktive Kopplung der Erregerspule mit den Sensorempfangsspulensätzen 3.1, 3.2 des Stators 2 her, die zu einer eindeutigen Kombination von Ausgangssignalen der Sensorempfangsspulensätzen 3.1, 3.2 sorgt, wie Fig. 4 entnommen werden kann.

Figur 4 stellt die Signalstärke S in % der als Dreieckssignale erzeugten Ausgangssignale 21, 22 der Sensorempfangsspulensätze 3.1, 3.2 über den zurückgelegten Linearweg X in der Bewegungsrichtung X dar. Diese Ausgangssignale 21, 22 werden zur Auswertung an die Auswerteschaltung 8 weitergeleitet. Von der Auswerteschaltung 8 werden die Ausgangssignale 21, 22 der Sensorempfangsspulensätze 3.1, 3.2 zu einem resultierenden Signal 20 zusammengesetzt, welches den zurückgelegten Linearweg X ergibt.

Die Cursorbänder 4.1, 4.2 bilden unterschiedliche Nonius-Spuren mit einer voneinander verschiedenen Anzahl von Cursorpads 5 mit dazu korrespondierenden Nichtkopplungsbereichen 6, wobei die Cursorpads 5 und Nichtkopplungsbereiche 6 der zwei Cursorbänder 4.1, 4.2 derart ausgebildet und zueinander angeordnet sind, dass eine Auswertung der relativen Position des beweglichen Teils zu dem Stator 2 mittels der Auswerteschaltung 8 nach Art des Nonius-Prinzips ermöglicht ist.

Nun kann in verschiedenen automotiven Anwendungen, insbesondere bei einem Lenksystem 10 im Fahrzeug 100, wie es in den Fig. 5 und 6 gezeigt ist, der Cursor an einem beweglichen Teil der Anwendung, etwa an einer Lenkaktuatorstange, befestigt, beispielsweise angeklebt oder angeschraubt, werden. Der Stator 2 wiederum kann an einem unbeweglichen bzw. nicht beweglichen Teil befestigt werden. Wird das bewegliche Teil bewegt, bewegt sich damit auch der Cursor, und zwar vorbei an dem Stator 2. Die zumindest eine Erregerspule sorgt in einer für den Fachmann bekannten Weise für eine Erregung bzw. Wirbelstromerzeugung in den Cursorpads 5, die wiederum jeweils von den Sensorempfangsspulensätzen 3.1, 3.2 erfasst werden. Dadurch kann die Auswerteschaltung 8 nach dem Nonius-Prinzip mit den Cursorbändern 4.1, 4.2 aufweisend die zueinander versetzten und in der Anzahl unterschiedlichen Cursorpads 5 einen Linearweg der Bewegung des Cursors in der Bewegungsrichtung X bzw. eine Linearposition, also eine Position in der linearen Bewegungsrichtung X, des Cursors gegenüber dem Stator 2 messen. Daraus kann auf die Linearposition bzw. den Linearweg des beweglichen Teils, also etwa der Lenkaktuatorstange 12 geschlossen werden.

Figur 2 zeigt ein nicht unter den Anspruchswortlaut fallendes Beispiel eines Cursors mit zwei Cursorbändern 4.1, 4.2 ohne die Transportstege 9.1, 9.2 aus Fig. 1 und in einer geringeren Anzahl von Cursorpads 5 und Nichtkopplungsbereichen 6 gegenüber Fig. 1.

Grundsätzlich kann die Anzahl an Cursorpads 5 und Nichtkopplungsbereichen 6 entsprechend der jeweiligen Anwendung, insbesondere dem dabei zu messenden Linearweg, frei gewählt werden. So kann beispielsweise die Anzahl an Cursorpads 5 zwischen 3 und 30, insbesondere zwischen 5 und 20, liegen. Ebenso kann die Anzahl an Nichtkopplungsbereichen 6 zwischen 2 und 29, insbesondere zwischen 4 und 19, liegen.

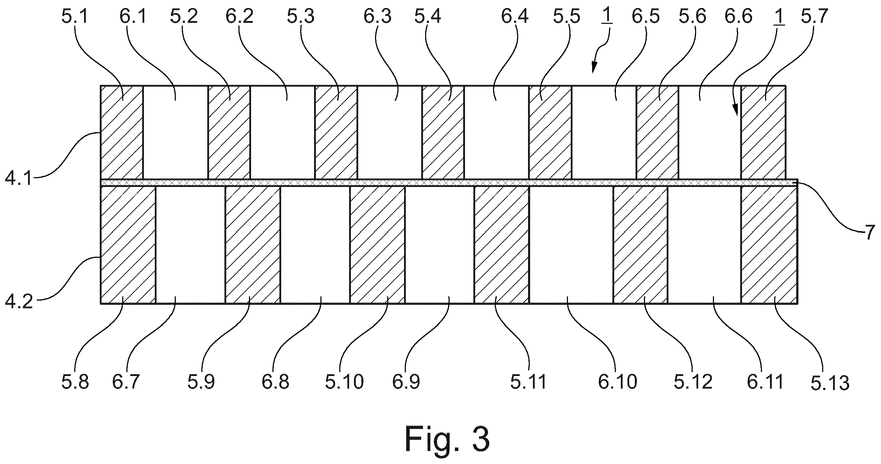

Figur 3 zeigt die erfindungsgemäße Ausführungsform eines Cursors, die sich gegenüber der Fig. 2 dadurch unterscheidet, dass der Verbindungssteg 7 nicht aus Metall, sondern aus einem nicht-metallischen Werkstoff, beispielsweise aus Kunststoff, ausgebildet ist. Der Verbindungssteg 7 bildet damit einen Nichtkopplungsbereich. Dabei können die Cursorpads 5 in geeigneter Beabstandung zueinander unmittelbar auf dem beweglichen Teil, etwa der Lenkaktuatorstange 12, aufgebracht werden.

Figur 5 zeigt ein Lenksystem 10 eines Fahrzeugs 100 in Form eines Automobils, welches in Form eines Steer-by-wire-Systems ausgebildet ist.

In sogenannten Steer-by-Wire Systemen, bei denen die Lenksäule entfällt, ist das System durch erstens eine Mensch-Maschine-Schnittstelle und zweitens eine Positionierungsvorrichtung an den Rädern des Fahrzeugs 100 vorgegeben. Die erstgenannte Einheit befindet sich im Fahrzeuginnenraum und besteht vorzugsweise aus einem Lenkrad mit Lenkwinkelsensorik und einer Rückstellvorrichtung. Die zweitgenannte Positionierungsvorrichtung ist verbunden mit den vorzugsweise beiden vorderen Rädern und wird durch einen Positionsregelkreis mit einem Sollwert und einem Istwert gebildet. Wie in einem Positionsregelkreis üblich, erfolgt die Regelung in digitaler Form mittels eines Positionsregelalgorithmus in einem Mikroprozessor oder einer anderen digitalen Regelung oder einem festverdrahteten Algorithmus in einer sogenannten State-Machine. Prinzipiell sind für die Regelaufgabe jedoch auch analoge Regelungen oder analog/digital-hybride Regelungen denkbar.

Um die Regelung präzise durchführen zu können, kommt dem Positionssensor eine hohe Bedeutung zu. Als Positionssensoren kommen prinzipiell Winkelsensoren oder Linearwegsensoren in Betracht. Die hier gewählte Ausführungsform stellt den Linearwegsensor 1 aus Fig. 1 an der Lenkaktuatorstange 12 des Lenksystems 10 bereit (siehe Fig. 6).

Das Lenksystem 10 umfasst ein Lenkelement 11, welches vorliegend als ein Lenkrad ausgebildet ist. Der Fahrer des Fahrzeugs 100 möchte das Fahrzeug 100 mittels des Lenkelements 11 lenken und dreht dazu das Lenkrad in eine bestimmte Richtung um einen bestimmten Lenkwinkel. Diesen Lenkwinkel und das Lenkmoment nimmt eine am Lenkrad verbaute Sensorik auf. Um genau zu sein, ist ein Steuergerät 15 (im Englischen auch als Electronic Control Unit, kurz ECU bezeichnet) des Lenksystems 10 elektronisch mit der entsprechenden Sensorik verbunden und empfängt den Lenkwunsch des Fahrers (Lenkwinkel und Lenkmoment) und leitet diesen an eine wiederum mit dem Steuergerät 15 verbundene Leistungseinheit 13 weiter, die häufig auch als Power-Pack bezeichnet wird.

Die Lenkung basiert dabei auf einem Positionsregelkreis mit einem Sollwert und einem Istwert. Mittels des induktiven Linearwegsensors 1 in der Leistungseinheit 13 (siehe Fig. 6) kann die Ist-Position der Räder des Fahrzeugs 100 festgestellt werden. Der Lenkaktuator 16 (siehe Fig. 6), ebenfalls in der Leistungseinheit 13, wird dann von der Steuereinheit 15 angesteuert, um die Lenkung entsprechend dem Fahrerwunsch zu betätigen. Dies geschieht, indem die Lenkaktuatorstange 12 linear nach rechts oder links bewegt wird und damit auch die Räder des Fahrzeugs 100 entsprechend bewegt. Dies geschieht so lange, bis der Linearwegsensor 1 das Erreichen der Soll-Position, die das Steuergerät 15 gemäß der Lenkradbetätigung des Fahrers vorgegeben hat, dem Steuergerät 15 mitteilt.

Figur 6 zeigt eine detailliertere Prinzipskizze des Lenksystems 10, welches auch die Komponenten der Leistungseinheit 13 zeigt. Der Linearwegsensor 1 befindet sich mit dem Stator 2 an einem Gehäuse 14 der Leistungseinheit 13, wobei die Cursorbänder 4.1, 4.2 auf der Lenkaktuatorstange 12 befestigt sind und relativ gegenüber vom Stator 2 bewegbar angeordnet sind. Das Gehäuse 14 kann beispielsweise eine Aussparung oder Tasche enthalten, in die der Stator 2 eingebettet sein kann.

Durch die Integration des Linearwegsensors 1 in die Leistungseinheit 13 entfallen die ansonsten notwendigen und mit Kosten behafteten Verkabelungen, da die in der Leistungseinheit 13 bestehenden genutzt bzw. vorteilhafterweise erweitert werden können. Zudem sind die Schnittstellen und die Versorgungsleitungen der Elektronik auf dem Stator 2 des Linearwegsensors 1 nicht gegen Kurzschlüsse der Versorgungsleitungen und Ausgangsleitungen des Linearwegsensors 1 zu schützen. Dieses erlaubt in der Regel eine vereinfachte Elektronik und für die verwendeten Halbleitertechnologien einen einfacheren und kostengünstigeren Herstellprozess. Durch eine kompaktere Bauart dieser Ausführung ist die Gesamtanordnung zudem unempfindlicher gegenüber elektromagnetischer Einstrahlung von Störfeldern, wodurch eine Erhöhung der Betriebsrobustheit der Sensorik erzielt wird.

Das Funktionsprinzip der Lenkeinheit 10 ist, wie oben beschrieben, derart, dass das Steuergerät 15 des Lenksystems 10 innerhalb der Lenkeinheit 10 den Lenkwunsch des Fahrers empfängt, wenn der Fahrer des Fahrzeugs 100 das Lenkelement 11 betätigt. Das Steuergerät 15 kann dann mittels der Linearposition bzw. des Linearwegs der Lenkaktuatorstange 12, die es aus den Messungen des Linearwegsensors 1 erhält oder errechnen kann, den elektromechanischen Aktor bzw. Lenkaktuator 16 zum Steuern der Lenkung des Fahrzeugs 100 entsprechend dem durch Betätigung des Lenkelements 11 seitens des Fahrers geäußerten Lenkwunsches betätigen.

Der Aktor 16 wir so lange betätigt, bis die Soll-Position gemäß dem Lenkwunsch des Fahrers erreicht ist. Dies ist dann der Fall, wenn die Regeldifferenz E = Ist-Position - Soll-Position gleich Null ist. Die Ist-Position wiederum geht aus den Messungen des Linearwegsensors 1 hervor.

### Bezugszeichenliste

- 1: induktiver Linearwegsensor
- 2: Stator
- 3: Sensorempfangsspule, Sensorempfangsspulensatz
- 4: Verschiebeelement, Cursorband
- 5: Koppelabschnitt, Cursorpad
- 6: Nichtkopplungsabschnitt
- 7: Verbindungssteg
- 8: Auswerteschaltung
- 9: Transportsteg
- 10: Lenksystem
- 11: Lenkelement
- 12: Lenkaktuatorstange
- 13: Leistungseinheit
- 14: Gehäuse
- 15: Steuergerät
- 16: elektromechanischer Aktor, Lenkaktuator
- 20: resultierendes Signal
- 21: Signal der ersten Sensorempfangsspule
- 22: Signal der zweiten Sensorempfangsspule
- 100: Fahrzeug
- X: Bewegungsrichtung, Linearweg
- S: Signal
- V: Versatz

## Patentansprüche

1. Induktiver Linearwegsensor (1), wobei der Linearwegsensor (1) aufweist:
- einen Stator (2) mit zumindest einer Erregerspule und zumindest einer Sensorempfangsspule (3),
- zumindest ein linear relativ gegenüber dem Stator (2) bewegliches Verschiebeelement (4), welches eine sich in Richtung der linearen Bewegungsrichtung (X) des Verschiebeelements (4) erstreckende Längserstreckung aufweist, wobei das zumindest eine Verschiebeelement (4) mit mehreren elektrisch leitfähigen Koppelabschnitten (5) zur induktiven Kopplung der zumindest einen Erregerspule mit der zumindest einen Sensorempfangsspule (3) sowie gegenüber den Koppelabschnitten (5) elektrisch weniger oder nicht leitfähigen Nichtkopplungsabschnitten (6) ausgebildet ist, wobei die Koppelabschnitte (5) in Richtung der Längserstreckung jeweils durch die Nichtkopplungsabschnitte (6) voneinander beabstandet sind,
- eine Auswerteschaltung (8), welche dazu eingerichtet ist, in Abhängigkeit von der induktiven Kopplung zwischen der zumindest einen Erregerspule und der zumindest einen Sensorempfangsspule (3) eine Linearposition des zumindest einen Verschiebeelements (4) relativ gegenüber dem Stator (2) zu erfassen, wobei der Stator (2) zumindest zwei Sensorempfangsspulen (3) und der Linearwegsensor (1) zumindest zwei relativ gegenüber dem Stator (2) bewegliche und parallel zueinander angeordnete Verschiebeelemente (4) aufweist, wobei die Koppelabschnitte (5) und Nichtkoppelabschnitte (6) der beiden Verschiebeelemente (4) in Richtung der Längserstreckung der Verschiebeelemente (4) zueinander versetzt angeordnet sind, wobei die zumindest zwei parallel zueinander angeordneten Verschiebeelemente (4) nebeneinander und in einer gemeinsamen Ebene angeordnet sind, einen Verbindungssteg (7), der aus einem nicht-metallischen Werkstoff ausgebildet ist, wobei die zumindest zwei parallel zueinander angeordneten Verschiebeelemente (4) durch den zwischen den Koppelabschnitten (5) der jeweiligen Verschiebeelemente (4) verlaufenden Verbindungssteg (7) miteinander verbunden sind.

2. Linearwegsensor (1) nach Anspruch 1, wobei die zumindest zwei Verschiebeelemente (4) jeweils eine unterschiedliche Anzahl an Koppelabschnitten (5) aufweisen und die Auswerteschaltung (8) zur Auswertung des zurückgelegten Linearwegs auf Basis der zumindest zwei Koppelabschnitte (4) und zumindest zwei Sensorempfangsspulen (3) nach Art des Nonius-Prinzips eingerichtet ist.

3. Linearwegsensor (1) nach einem der voranstehenden Ansprüche, wobei die zumindest zwei Verschiebeelemente (4) als sich in Richtung ihrer Längserstreckung in einer Ebene erstreckende Flachstücke ausgebildet sind.

4. Linearwegsensor (1) nach einem der voranstehenden Ansprüche, wobei die Koppelabschnitte (5) als Erhebungen gegenüber den Nichtkopplungsabschnitten (6) ausgebildet sind.

5. Linearwegsensor (1) nach einem der voranstehenden Ansprüche, wobei die Nichtkopplungsabschnitte (6) als Aussparungen zwischen den Koppelabschnitten (5) der zumindest zwei Verschiebeelemente (4) ausgebildet sind.

6. Linearwegsensor (1) nach einem der voranstehenden Ansprüche, wobei die zumindest zwei Verschiebeelemente (4) metallische Stanzteile sind.

7. Linearwegsensor (1) nach einem der Ansprüche 1 bis 5, wobei die zumindest zwei Verschiebeelemente (4) elektrisch nicht leitfähige Träger aufweisen uns die Koppelabschnitte (5) auf den Trägern aufgebracht sind.

8. Lenksystem (10) für ein Fahrzeug (100), wobei das Lenksystem (10) den Linearwegsensor (1) nach einem der voranstehenden Ansprüche aufweist.

9. Lenksystem (10) nach Anspruch 8, wobei die zumindest zwei Verschiebeelemente (4) an einer Lenkaktuatorstange (12) des Lenksystems (10) angeordnet sind.

10. Lenksystem (10) nach Anspruch 8 oder 9, wobei das Lenksystem (10) als ein Steer-by-wire-System mit einem Steuergerät (15) und einem elektromechanischen Aktor (16) ausgebildet ist, wobei das Steuergerät (15) mit dem Linearwegsensor (1) gekoppelt ist und dazu eingerichtet ist, die vom Linearwegsensor (1) erfasste Linearposition in einen Lenkbefehl für den elektromechanischen Aktor (16) umzusetzen und an den elektromechanischen Aktor (16) zu übertragen, sodass der elektromechanische Aktor (16) eine dem Lenkbefehl entsprechende Lenkbewegung ausführen kann.

11. Lenksystem (10) nach Anspruch 10, wobei der Linearwegsensor (1) zumindest teilweise in oder an einem Gehäuse (14) einer Leistungseinheit (13) des Lenksystems (10) angeordnet ist, welche zumindest den elektromechanischen Aktor (16) aufweist.

12. Fahrzeug (100) mit einem Lenksystem (10) nach einem der Ansprüche 8 bis 11.

## Claims

1. Inductive linear position sensor (1), wherein the linear position sensor (1) comprises:
- a stator (2) with at least one excitation coil and at least one sensor receiver coil (3),
- at least one sliding element (4) that is movable linearly relative to the stator (2), which has a longitudinal extent extending in the direction of the linear movement (X) of the sliding element (4), wherein the at least one sliding element (4) is formed with a plurality of electrically conductive coupling sections (5) for inductive coupling of the at least one excitation coil to the at least one sensor receiver coil (3), as well as with non-coupling sections (6) that are electrically less conductive than the coupling sections (5) or non-conductive, wherein the coupling sections (5) are separated from one another in the direction of the longitudinal extent by the non-coupling sections (6),
- an evaluation circuit (8) configured to detect a linear position of the at least one sliding element (4) relative to the stator (2) as a function of the inductive coupling between the at least one excitation coil and the at least one sensor receiver coil (3), wherein the stator (2) comprises at least two sensor receiver coils (3) and the linear position sensor (1) comprises at least two sliding elements (4) that are movable relative to the stator (2) and arranged parallel to one another, wherein the coupling sections (5) and non-coupling sections (6) of the two sliding elements (4) are arranged offset to each other in the direction of the longitudinal extension of the sliding elements (4), wherein the at least two sliding elements (4) arranged parallel to one another are arranged side by side and in a common plane,
- a connecting rib (7) made of a non-metallic material, wherein the at least two sliding elements (4) arranged parallel to one another are connected to one another by the connecting rib (7) that extends between the coupling sections (5) of the respective sliding elements (4).

2. Linear position sensor (1) according to claim 1, wherein the at least two sliding elements (4) each have a different number of coupling sections (5) and the evaluation circuit (8) being configured to evaluate the linear distance travelled based on the at least two coupling sections (4) and at least two sensor receiver coils (3) according to the Vernier principle.

3. Linear position sensor (1) according to one of the preceding claims, wherein the at least two sliding elements are designed as flat pieces extending in one plane in the direction of their longitudinal extent.

4. Linear position sensor (1) according to one of the preceding claims, wherein the coupling sections (5) are formed as raised areas relative to the non-coupling sections (6).

5. Linear position sensor (1) according to one of the preceding claims, wherein the non-coupling sections (6) are formed as recesses between the coupling sections (5) of the at least two sliding elements (4).

6. Linear position sensor (1) according to one of the preceding claims, wherein the at least two sliding elements (4) are metal stamped parts.

7. Linear position sensor (1) according to one of claims 1 to 5, wherein the at least two sliding elements (4) have electrically non-conductive carriers and the coupling sections (5) are mounted on the carriers.

8. Steering system (10) for a motor vehicle (100), wherein the steering system (10) comprises the linear position sensor (1) according to one of the preceding claims.

9. Steering system (10) according to claim 8, wherein the at least two sliding elements (4) are arranged on a steering actuator rod (12) of the steering system (10).

10. Steering system (10) according to claim 8 or 9, wherein the steering system (10) is designed as a steer-by-wire system with a control unit (15) and an electromechanical actuator (16), wherein the control unit (15) is coupled to the linear position sensor (1) and is configured to convert the linear position detected by the linear position sensor (1) into a steering command for the electromechanical actuator (16) and to transmit the steering command to the electromechanical actuator (16), so that the electromechanical actuator (16) can perform a steering movement corresponding to the steering command.

11. Steering system (10) according to claim 10, wherein the linear position sensor (1) is at least partially arranged in or on a housing (14) of a power unit (13) of the steering system (10), which comprises at least the electromechanical actuator (16).

12. Motor vehicle (100) with a steering system (10) according to one of claims 8 to 11.

## Revendications

1. Capteur inductif de position linéaire (1), le capteur de position linéaire (1) comprenant:
- un stator (2) comportant au moins une bobine d'excitation et au moins une bobine de réception de capteur (3),
- au moins un élément coulissant (4) mobile de manière linéaire par rapport au stator (2) qui présente une extension longitudinale s'étendant dans la direction du mouvement linéaire (X) de l'élément coulissant (4), l'élément coulissant (4) étant muni de plusieurs sections de couplage électriquement conductrices (5) pour le couplage inductif de la au moine une bobine d'excitation avec la au moine une bobine de réception de capteur (3), ainsi que de sections de non-couplage (6) moins conductrices que les sections de couplage (5) ou non conductrices, les sections de couplage (5) étant espacées les unes des autres dans le sens de l'extension longitudinale par les sections de non-couplage (6),
- un circuit d'évaluation (8) configuré pour détecter, en fonction du couplage inductif entre la au moins une bobine d'excitation et la au moins une bobine de réception de capteur (3), une position linéaire de la au moins un élément coulissant (4) par rapport au stator (2), le stator (2) comportant au moins deux bobines de réception de capteur (3) et le capteur de position linéaire (1) comportant au moins deux éléments coulissants (4) mobiles par rapport au stator (2) et disposés parallèlement l'un à l'autre, les sections de couplage (5) et les sections de non-couplage (6) des deux éléments coulissants (4) étant décalées l'une par rapport à l'autre dans la direction de l'extension longitudinale des éléments coulissants (4), les au moins deux éléments coulissants (4) disposés parallèlement l'un à l'autre étant placés côte à côte et dans un plan commun,
- une nervure de liaison (7) réalisée en un matériau non métallique, les au moins deux éléments coulissants (4) disposés parallèlement l'un à l'autre étant reliés entre eux par la nervure de liaison (7) s'étendant entre les sections de couplage (5) des éléments coulissants (4) respectifs.

2. Capteur de position linéaire (1) selon la revendication 1 **caractérisé en ce que** les au mons deux éléments coulissants (4) présentent chacun un nombre différent de sections de couplage (5) et **en ce que** le circuit d'évaluation (8) est configuré pour évaluer la course linéaire parcourue sur la base de deux sections de couplage (4) au moins et de deux bobines de réception de capteur (3) au moins selon le principe du vernier.

3. Capteur de position linéaire (1) selon l'une des revendications précédentes **caractérisé en ce que** les au moins deux éléments coulissants sont réalisés sous forme de pièces plates s'étendant dans un plan dans la direction de leur extension longitudinale.

4. Capteur de position linéaire (1) selon l'une des revendications précédentes **caractérisé en ce que** les sections de couplage (5) sont conçues comme des protubérances par rapport aux sections de non-couplage (6).

5. Capteur de position linéaire (1) selon l'une des revendications précédentes **caractérisé en ce que** les sections de non-couplage (6) sont conçues comme des évidements entre les sections de couplage (5) des deux éléments coulissants (4) au moins.

6. Capteur de position linéaire (1) selon l'une des revendications précédentes **caractérisé en ce que** deux éléments coulissants (4) au moins sont des pièces métalliques embouties.

7. Capteur de position linéaire (1) selon l'une des revendications 1 à 5 **caractérisé en ce que** deux éléments coulissants (4) au moins comportent des supports non conducteurs électriquement et **en ce que** les sections de couplage (5) sont montées sur les supports.

8. Système de direction (10) pour un véhicule (100), le système de direction (10) comportant le capteur de position linéaire (1) selon l'une des revendications précédentes.

9. Système de direction (10) selon la revendication 8 **caractérisé en ce que** deux éléments coulissants (4) au moins sont disposés sur une tige d'actionneur de direction (12) du système de direction (10).

10. Système de direction (10) selon la revendication 8 ou 9, le système de direction (10) étant conçu comme un système steer-by-wire avec un appareil de commande (15) et un actionneur électromécanique (16), l'appareil de commande (15) étant couplé au capteur de position linéaire (1) et étant conçu pour convertir la position linéaire détectée par le capteur de position linéaire (1) en une instruction de direction pour l'actionneur électromécanique (16) et la transmettre à l'actionneur électromécanique (16), afin que l'actionneur électromécanique (16) puisse exécuter un mouvement de direction correspondant à l'instruction de direction.

11. Système de direction (10) selon la revendication 10 **caractérisé en ce que** le capteur de position linéaire (1) est disposé au moins en partie dans ou sur un boîtier (14) d'une unité de puissance (13) du système de direction (10), celle-ci comprenant au moins l'actionneur électromécanique (16).

12. Véhicule (100) équipé d'un système de direction (10) selon l'une des revendications 8 à 11.
